# EUROPÄISCHE PATENTSCHRIFT

(11) **EP 0 361 528 B1**
(45) Veröffentlichungstag und Bekanntmachung des Hinweises auf die Patenterteilung: **15.05.1996**
(21) Anmeldenummer: 89118194.3
(22) Anmeldetag: 30.09.1989
(51) Int. Cl.: F04D 29/04

(54) **Lagergehäuse**
Bearing housing
Carter de palier

(30) Priorität: 30.09.1988 DE 3833331
(43) Veröffentlichungstag der Anmeldung: 04.04.1990
(73) Patentinhaber: THYSSEN POLYMER GMBH, D-81601 München (DE)
(72) Erfinder: Neueder, Ludwig, Dipl.-Ing., D-8443 Furth - Bogen (DE)

(56) Entgegenhaltungen:
- FR-A- 2 439 888
- FR-A- 2 570 132
- GB-A- 1 258 074

## Beschreibung

Die Erfindung bezieht sich auf ein Lagergehäuse für Fluidpumpen, beispielsweise Kühlpumpen an Fahrzeugmotoren oder dergl., das mit dem Motorblock oder dergl. verbunden ist und am Ende des Lagerzylinders vor dem Förderraum der Pumpe eine Aufnahme für ein Dichtmittel besitzt.

Derartige Lagergehäuse sind an sich bekannt und beispielsweise in der US-PS 37 230 29 und US-PS 37 781 81 beschrieben. Auch die US-PS 16 493 20 zeigt ein Lagergehäuse für Wasserpumpen von Verbrennungsmotoren. Diese Lagergehäuse bestehen sämtlich aus metallischen Weerkstoffen. Im Zuge der Gewichtsersparnis und auch aus Korrossionsgründen steigt bei Fahrzeugen der Badarf an Kunststoffteilen im Fahrzeugbau ständig, weshalb mit der GB-PS 125 80 74 eine solche Wasserpumpe aus Kunststoff für den Einsatz in Waschmaschinen vorgeschlagen wurde, die mit kleinen, etwa dachförmig ausgebildeten, Rippen ausgestattet ist, wodurch die für den robusten Einsatz in Fahrzeugen erforderliche Festigkeit aber nicht erreicht wird. Da das Lagergehäuse außerdem aus zwei Teilen zusammengeschweißt ist, ist keine Entwässerungsmöglichkeit vorhanden und eine wirtschaftliche Herstellbarkeit ist nicht gegeben.

Hier will die Erfindung Abhilfe schaffen.

Die Erfindung, wie sie in den Ansprüchen beschrieben ist, löst die Aufgabe, ein Lagergehäuse aus Kunststoff mit austauschbarer Lager- und Dichtkassette zu besitzen, das mechanische Wärme-, Korrosions- und Hydrolysebelastungen aufnehmen kann und eine ausreichende Lebensdauer aufweist.

Die durch die Erfindung erreichten Vorteile sind im wesentlichen darin zu sehen, daß die am Lagerzylinder über das Lager durch An- und Abtriebskräfte einwirkenden Momente über Rippen vom Lagerzylinder in einen im Flanschbereich desselben befindlichen Flanschbund eingeleitet werden, wobei dieser Flanschbund die statisch und dynamisch wirkenden Zug-Druckkräfte in die als Befestigung dienenden Flanschaugen einleitet. Über die Variation der Höhe, Form und Dicke des Flanschbundes, des Lagerzylinders und der Rippen bzw. Steganordnungen kann die Steifigkeit in Bezug auf Kraftspitzen und Vibrationen bzw. Beschleunigungskräfte vorbestimmt werden. Ein weiterer Vorteil des erfindungsgemäß ausgebildeten Lagergehäuses ist darin zu sehen, daß das Leckwasser über einen Entwässerungskanal und eine Verdampfungskammer abgeleitet wird. Weiterhin ist von Vorteil, daß das Kavitationsverhalten von Kunststoffen gegenüber metallischen Werkstoffem besser ist. Außerdem ist eine Axialsicherung für den Lagerzylinder vorgesehen. Dadurch wird das Lager auch als mittragendes Element genutzt, indem es statische Kräfte, wie Biegekräfte, zusammen mit dem Lagerzylinder, aufnimmt. Eine Ausführungsvariante sieht vor, daß das Lagergehäuse über einen Steg, der entweder ringförmig oder schräg oder konisch ausgebildet sein kann, mit dem Lagergehäuse verbunden ist.

Durch eine schräge und/oder konische Formgebung des Steges können außerdem die Strömungsverhältnisse des Fluids beeinflußt werden. Von Vorteil ist außerdem, daß die Demontierbarkeit des gesamten Aggregates voll erhalten bleibt. Ein weiterer Vorteil besteht darin, daß die Kompensation der unterschiedlichen Wärmedehnung des Dichtelementes und Kunststoffgehäuses des Lagerzylinders im Bereich des Sitzes des Dichtelementes über einen O-Ring erfolgt und somit auf die übliche Verwendung eines Dichtlackes oder dergl. verzichtet werden kann, wobei die Sicherheit noch erhöht ist.

Die Erfindung ist anhand eines in den Abbildungen dargestellten Ausführungsbeispieles näher erläutert.

Es zeigt:
Figur 1 einen Schnitt durch ein Lagergehäuse,
Figur 2 eine Draufsicht auf Figur 1,
Figur 3 eine Ausführungsvariante des Lagergehäuses
Figur 4 eine weitere Ausführungsvariante,
Figur 5 eine Draufsicht auf den Erfindungsgegenstand
Figur 6 eine Ausführungsvariante der Figur 5.

In den Figuren ist ein Lagergehäuse für Fluidpumpen und entsprechend wirkende Geräte dargestellt, das in seinem grundsätzlichen Aufbau aus einem Gehäuse mit dem eigentlichen Flanschbund 1 oberhalb eines Absatzes 1a, unter dem sich eine Nut 1b für die Aufnahme eines Dichtmittels befindet und die nach unten zum Gehäuseteil 1d von einem Vorsprung 1c begrenzt ist, gebildet. Der Lagerzylinder 2 ist über einen Verbindungsring 3 mit dem Gehäuseunterteil 1d verbunden, dessen Endteil mit 1e bezeichnet ist und der Aufnahme des Lagerzylinders dient.

Mehrere über den Umfang des Flanschbundes 1 verteilte Flanschaugen 4 (4a,4c,4d,4f) dienen der Befestigung des Lagergehäuses beispielsweise am Motorblock, der jedoch in den Abbildungen nicht dargestellt ist. Die mit Gewinde versehenen Flanschaugen 4b und 4e dienen zur leichteren Demontage des Lagergehäuses. Mit 5 ist ein Anschlag für das Lager und eine darunter eingesetzte Dichtkassette dargestellt. Überschüssiges Fluid, Schmiermittel usw., wird über den Entwässerungskanal 6c der Verdampferkammer 6a zugeleitet. Diese Verdampferkammer 6a kann entweder integriertes Teil des Lagergehäuses oder als separates Teil darin eingesetzt sein. Die Verdampferkammer wird einerseits, falls sie in das Lagergehäuse integriert ist, von dem äußeren Mantel des Lagerzylinders 2 und andererseits durch eine Wand 6b gebildet. Der Lagerzylinder 2 besitzt in seinem oberen Teil eine Hinterschneidung 2c, in die ein Axialsicherungselement K, beispielsweise ein Schnappring und dergl., eingesetzt werden kann. Der Lagerzylinder 2 ist mit mehreren radial von ihm ausgehenden, sich axial erstreckenden Rippen 7 (7a bis 7j) umgeben, die am Verbindungsring 3 wurzeln und bis in den Flanschbund 1 und an die Flanschaugen 4 ragen. Die beiden Rippem 7a und 7b bilden bei integrierter Ausbildung gleichzeitig die seitliche Begrenzung der Verdampferkammer 6a. Die Rippen 7 können entweder mit den Flanschaugen verbunden oder direkt mit dem Flanschbund 1 verbunden sein. Die Rippen 7 selbst sind vom Ende des Flanschbundes 1 nach oben konisch zum Ende des Lagerzylinders hin verlaufend ausgebildet.

Diese Rippen 7 können entweder am Ende des Lagerzylinders 2 oder kurz davor enden.

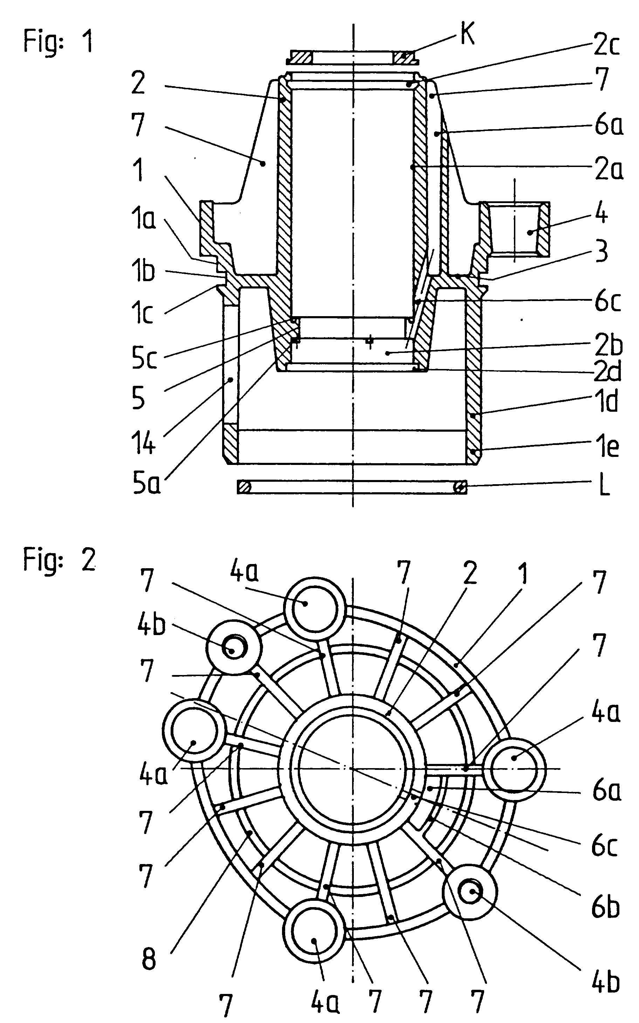

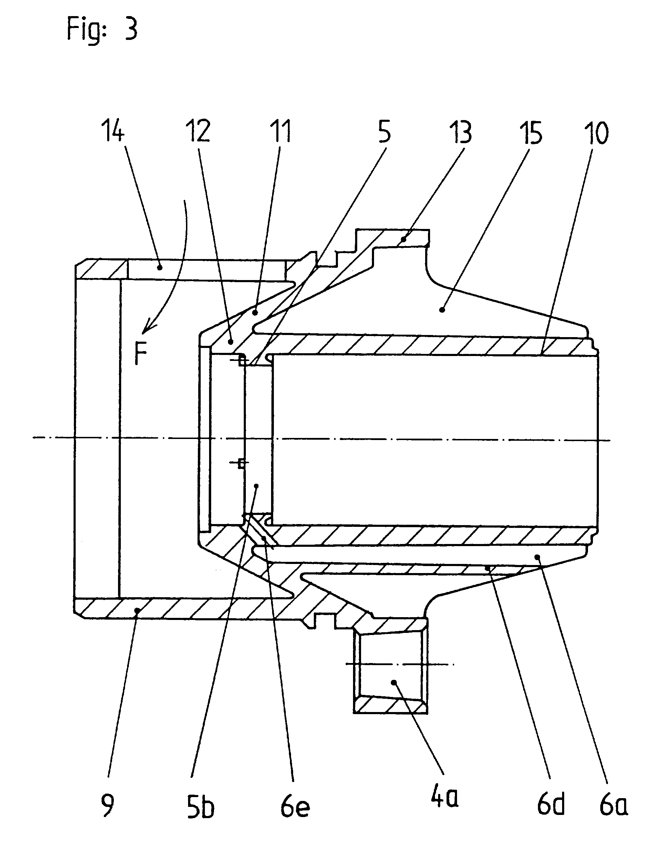

Die Figur 3 zeigt eine Ausführungsvariante der Figur 1 mit einem konisch ausgebildeten Verbindungssteg 11, der auch asymmetrisch ausgeformt sein kann, um den Fluß des Fluids zu verbessern. Der Drehpunkt 12 des Lagerzylinders 10 ist an dessen Anfang ver legt und damit eine größere Stabilisierung im Dichtelementbereich erreicht. Die Rippen 15 (15a,15b) sind ebenfalls auf den Umfang des Lagerzylinders 10 verteilt. Sie sind dabei einerseits mit dem äußeren Umfang des Lagerzylinders 10 und andererseits mit dem Konus 11 und dem Flanschbund 13 verbunden, während der Rest der Rippe ohne Begrenzung verbleibt. Mit 14 ist eine im Unterteil 9 vorgesehene Öffnung für das Fluid F bezeichnet. Das durch diese Öffnung 14 in das Gehäuse 9 einströmende Fluid trifft dabei auf die konisch ausgebildete Außenwand des Verbindungssteges 11 und wird strömungsgünstig durch das (nicht dargestellte) Laufrad gesogen.

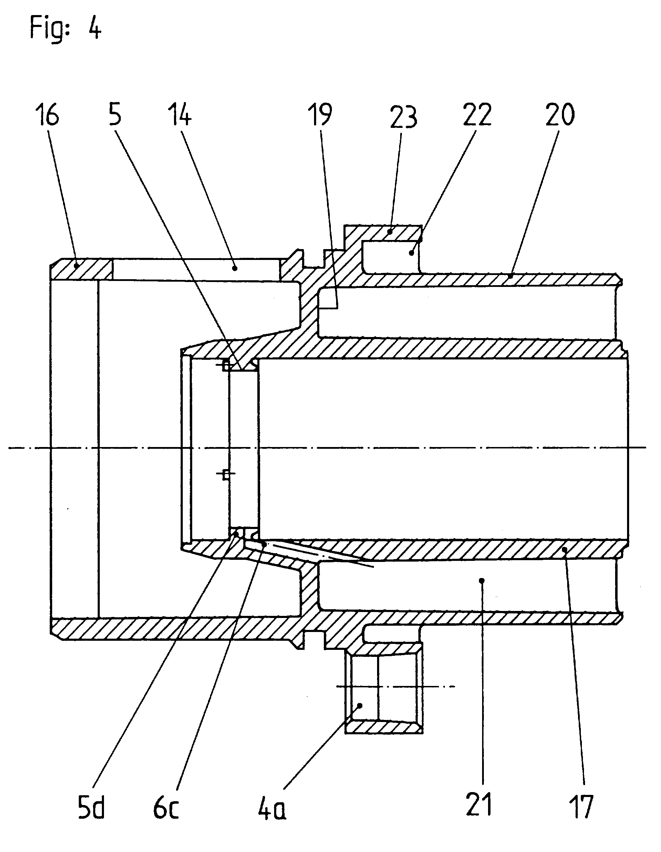

Die Figur 4 zeigt eine weitere Ausführungsvariante der Figuren 1 und 3. Dabei ist der Lagerzylinder 17 von einem weiteren Zylinder 20 konzentrisch umgeben. Die Rippen 21 sind zwischen den beiden Zylindern 17 und 20 beispielsweise radial angeordnet. Zwischen dem äußeren Zylinder 20 und dem Flanschring 23 sind Rippen vorgesehen. Die Rippen 21 ragen bis auf den Verbindungssteg 19, der beispielsweise auch konisch, schräg etc. ausgebildet sein kann.

Zwischen den beiden Zylindern 17 und 20 ist zwischen zwei Rippen 21 die nicht dargestellte Verdampferkammer 6a mit ihrem Entwässerungskanal 6c vorgesehen.

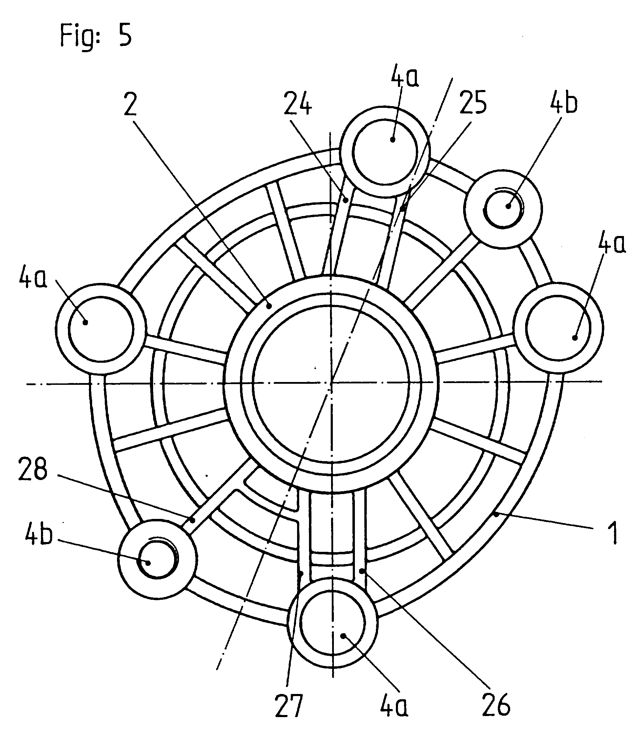

Die Figur 5 verdeutlicht in der Draufsicht die Anordnung der Rippen 7, die, wie beispielsweise die Rippen 24 und 25 sowie 26 und 27, einen nicht radialen Verlauf zwischen dem Lagerzylinder 2 bzw. 10 bzw. 17 nehmen können.

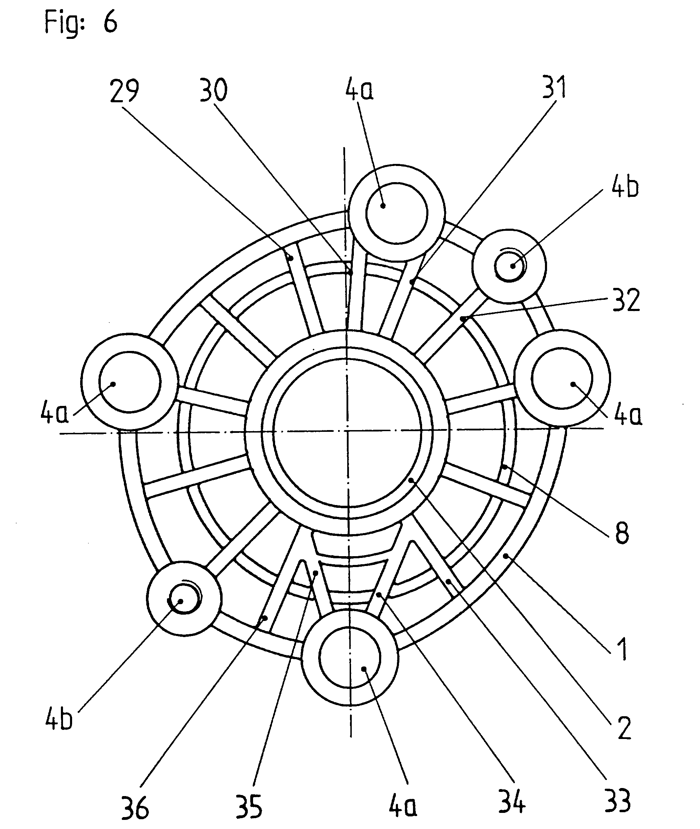

Es sind auch Anordnungen wie sie in der Figur 6 dargestellt sind möglich, dort sind die Rippen 30 und 31 mit den Rippen 29 und 32 in Richtung Achsmitte verlaufender Anordnung vorgesehen. Die Rippen 34,35 münden in die Rippen 33,36 und die Flanschaugen 4a verlaufen indirekt über diese Rippen 33,36 und dem Lagerzylinder. Diese Rippenanordnungen bzw. die Rippenanordnung nach Figur 5 können auch je nach Bedarf kombiniert werden.

Es sind auch die in den Abbildungen beispielsweise dargestellten Varianten der Rippenausbildung sowie des Verbindungssteges 3 bzw. 11 miteinander kombinierbar. Darüber hinaus kann der Teil des Lagergehäuses, der den Lagerzylinder 2 bzw. 10, 17 beinhaltet, auch ohne das eigentliche Unterteil 1d bzw. 9 bzw. 16 Verwendung finden. Auch kann der Leitring L des Laufrades Teil des Unterteiles (1d) des Gehäuses in diesem Bereich 1e sein.

## Patentansprüche

1. Lagergehäuse aus Kunststoff für Fluidpumpen, das am Ende eines Lagerzylinders (2; 10; 17), vor dem Förderraum der Pumpe, eine Aufnahme für ein Dichtmittel besitzt, wobei am Lagerzylinder (2; 10; 17) axial verlaufende Rippen vorgesehen sind, die im Flanschbereich in einen umlaufenden Flanschbund (1) übergehen, **dadurch gekennzeichnet** daß weitere Rippen (24, 25, 26, 27, 34, 35) parallel verlaufen und/oder in, in Richtung Achsmitte des Lagergehäuses verlaufenden, Rippen münden.

2. Lagergehäuse nach Anspruch 1 **dadurch gekennzeichnet, daß** der Lagerzylinder (2) mit einem Flanschring (1) über einen Verbindungssteg (3) gekoppelt ist und eine weitere Abstützung des Lagerzylinders (2) durch radial nach außen weisende Rippen (7) vorgesehen ist, die von dem Verbindungssteg (3) ausgehend, sich entlang dem Lagerzylinder (2) bis über den Flanschring (1) hinaus erstreken.

3. Lagergehäuse nach Anspruch 1 und 2, **dadurch gekennzeichnet daß**, ein Leckwassersammler (6a) über einen Entwässerungskanal (6c) mit dem Innenraum des Lagerzylinders (2) verbunden ist.

4. Lagergehäuse nach Anspruch 1-3, **dadurch gekennzeichnet,** daß der Leckwassersammler (6a) als Kammer ausgebildet ist.

5. Lagergehäuse nach Anspruch 1-4, **dadurch gekennzeichnet,** daß der Leckwassersammler (6a) als separates Teil in das Lagergehäuse eingesetzt ist.

6. Lagergehäuse nach Anspruch 1-5, **dadurch gekennzeichnet,** daß der Entwässerungskanal (6c) im Bereich des Dichtelementsitzes (2b) mündet.

7. Lagergehäuse nach Anspruch 1-6, **dadurch gekennzeichnet, daß** der Entwässerungskanal (6e) auf der Lagerseite des Anschlages (5) mündet.

8. Lagergehäuse nach Anspruch 1-7, **dadurch gekennzeichnet, daß** der Lagerzylinder (17) mit einem weiteren Versteifungszylinder (20) umgeben ist und radiale Rippen (21) vorgesehen sind, die beide Zylinder (17,20) miteinander und dem Verbindungssteg (19) verbinden.

9. Lagergehäuse nach Anspruch 1-8, **dadurch gekennzeichnet, daß** der Leckwassersammler in das Lagergehäuse selbst integriert ist.

10. Lagergehäuse nach Anspruch 1-9, **dadurch gekennzeichnet, daß** ein Flanschring (1) vorgesehen ist, der Flanschaugen (4) für Befestigungsmittel besitzt, die über Stege (7) mit dem Lagerzylinder (2) verbunden sind.

11. Lagergehäuse nach Anspruch 1-10, **dadurch gekennzeichnet, daß** die den Lagerzylinder (10) umgebenden Rippen (15) annähernd dachförmig ausgebildet sind.

12. Lagergehäuse nach Anspruch 1-11, **dadurch gekennzeichnet, daß** eine horizontale Nut (1b) unterhalb des Flanschringes (1) vorgesehen ist.

13. Lagergehäuse nach Anspruch 1-12, **dadurch gekennzeichnet, daß** mindestens zwischen zwei der Rippen (7,15,21) ein mit dem Innenraum (5) in Verbindung stehender Leckwassersammler (6a) vorgesehen ist.

14. Lagergehäuse nach Anspruch 1-13, **dadurch gekennzeichnet, daß** ein Überlauf (5d) vorgesehen ist.

15. Lagergehäuse nach Anspruch 1-14, **dadurch gekennzeichnet, daß** eine Axialsicherung (2) im Lagersitz (2a) vorgesehen und als Schnappverbindung ausgebildet ist und mit einem Sicherungsring (K) kombiniert ist.

16. Lagergehäuse nach Anspruch 1-15, **dadurch gekennzeichnet, daß** die Axialsicherung (2c) als Klauensicherung ausgebildet und mit einem Sicherungsring (K) kombiniert ist.

17. Lagergehäuse nach Anspruch 1-16, **dadurch gekennzeichnet, daß** die Flanschaugen (4a) mit Rippen (30,31) sowie dem Lagerzylinder (20) verbunden sind.

18. Lagergehäuse nach Anspruch 1-17, **dadurch gekennzeichnet, daß** ein Dichtelement zwischen der rotierenden Welle und dem stehenden Lagerzylinder (2) vorgesehen ist, das gegenüber dem Dichtelementsitz (2b) mittels einer elastischen Dichtung in der Aussparung (2d) zusätzlich abgedichtet ist.

19. Lagergehäuse nach Anspruch 1-18, **dadurch gekennzeichnet, daß** ein Anschlag (5) eine umlaufende Nut (5c) zur Aufnahme von Verunreinigungen aus dem Lagersitzbereich (2a) besitzt.

20. Lagergehäuse nach Anspruch 1-19, **dadurch gekennzeichnet, daß** Noppen (5a) als Anschlag und Abstandshalter für ein Dichtelement vorgesehen sind.

21. Lagergehäuse nach Anspruch 2, **dadurch gekennzeichnet, daß** der Verbindungssteg (3) ringförmig ausgbildet ist.

22. Lagergehäuse nach Anspruch 2, **dadurch gekennzeichnet, daß** der Verbindungssteg (3) schräg zur Achse des Lagerzylinders(2) verläuft.

23. Lagergehäuse nach Anspruch 2, **dadurch gekennzeichnet, daß** der Verbindungssteg (3) als Konus ausgebildet ist.

24. Lagergehäuse nach Anspruch 1-20, **dadurch gekennzeichnet, daß** der Bereich (1e) des Unterteiles (1d) mit einem Leitring L mit oder ohne Leitschaufel ergänzbar ist, wobei das Laufrad als offenes Laufrad ausgebildet ist.

25. Lagergehäuse nach Anspruch 1-20, **dadurch gekennzeichnet, daß** die Nut (1b) durch einen vorspringenden umlaufenden Ring (1c) fluidseitig so begrenzt ist, daß dessen Durchmesser im Urformprozess geringer ist als der Durchmesser (1a) und im Betriebszustand beide gleich sind.

## Claims

1. Bearing housing of plastic material for fluid pumps, having at the end of a bearing cylinder (2; 10; 17) a retainer for a sealing agent before the delivery compartment of the pump, axially extending ribs being provided at said bearing housing (2; 10; 17) which change into a surrounding flange collar (1) in the flange area, **characterized in that** further ribs (24, 25, 26. 27, 34, 35) extend parallel and/or towards the centre of the axis of the bearing housing.

2. Bearing housing according to claim 1, **characterized in that** said bearing cylinder (2) is coupled via a connecting web (3) to a flange collar (1 ) and a further support of said bearing cylinder (2) is provided by ribs (7) oriented radially outwards which extend from said connecting web (3) along said bearing cylinder (2) beyond said flange collar (1).

3. Bearing housing according to claims 1 and 2, **characterized in that** a collector of leakage water (6a) is connected to the inside of said bearing cylinder (2) via a drain duct (6c).

4. Bearing housing according to claims 1 to 3, **characterized in that** said collector of leakage water (6a) is designed as a chamber.

5. Bearing housing according to claims 1 to 4, **characterized in that** said collector of leakage water (6a) is inserted as a separate part into said bearing housing.

6. Bearing housing according to claims 1 to 5, **characterized in that** said drain duct (6c) leads into the area of the seat of said sealing element (2b).

7. Bearing housing according to claims 1 to 6, **characterized in that** said drain duct (6e) leads to the bearing side of the stop (5).

8. Bearing housing according to claims 1 to 7, **characterized in that** said bearing cylinder (17) is surrounded by another stiffening cylinder (20) and radial ribs (21) are provided which connect both cylinders (17, 20) with each other and with said connecting web (19).

9. Bearing housing according to claims 1 to 8, **characterized in that** said collector of leakage water is integrated into said bearing housing itself.

10. Bearing housing according to claims 1 to 9, **characterized in that** a flange collar (1 ) is provided which has flange eyes (4) for retention means which are connected vis webs (7) with said bearing cylinder (2).

11. Bearing housing according to claims 1 to 10, **characterized in that** the ribs (15) surrounding said bearing cylinder (10) are shaped approximately rooflike.

12. Bearing housing according to claims 1 to 11, **characterized in that** a horizontal groove (1 b) is provided beneath said flange collar (1).

13. Bearing housing according to claims 1 to 12, **characterized in that** at least between two of said ribs (7, 15, 21) a collector of leakage water (6a) is provided which is connected to the internal chamber.

14. Bearing housing according to claims 1 to 13, **characterized in that** an overflow (5d) is provided.

15. Bearing housing according to claims 1 to 14, **characterized in that** an axial safety means is provided in the bearing seat (2a) and is designed as a catch connection and is combined with a circlip (K).

16. Bearing housing according to claims 1 to 15, **characterized in that** said axial safety means is provided in the relief cut (2c) of said bearing seat (2a) and is designed as a snap connection and is combined with a circlip (K).

17. Bearing housing according to claims 1 to 16, **characterized in that** said flange eyes (4a) are connected with ribs (30, 31) and said bearing cylinder (20).

18. Bearing housing according to claims 1 to 17, **characterized in that** a sealing element is provided between the rotating shaft and the stationary bearing cylinder (20) which is additionally sealed against the seat (2b) of said sealing element by means of an elastic seal in the recess (2d).

19. Bearing housing according to claims 1 to 18, **characterized in that** a stop (5) has a surrounding groove (5c) to take up soilings from the area of said bearing seat (2a).

20. Bearing housing according to claims 1 to 19, **characterized in that** projections (5a) are provided as a stop and spacer for a sealing element.

21. Bearing housing according to claims 2, **characterized in that** said connecting web (3) has an annular configuration.

22. Bearing housing according to claims 2, **characterized in that** said connecting web (3) extends obliquely to the axis of said bearing cylinder (2).

23. Bearing housing according to claims 2, **characterized in that** said connecting web (2) has a conical configuration.

24. Bearing housing according to claims 1 to 20, **characterized in that** the end part (1e) of said lower part (1d) can be complemented by a guide ring L with or without a guide vane, the impeller being designed as an open impeller.

25. Bearing housing according to claims 1 to 20, **characterized in that** said groove (1b) is limited on the fluid side by a projecting, surrounding ring (1c) in such a way that the diameter of said ring in its original plastic condition is smaller than the diameter (1 a) and both being identical in operating condition.

## Revendications

1. Logement de palier en matière plastique pour pompes à fluides, portant à l'extrémité d'un cylindre de palier (2; 10; 17) en amont du compartiment de refoulement de la pompe un réceptacle pour un moyen d'étanchéification, le cylindre de palier (2; 10; 17) devant porter des nervures disposées dans le sens axial et qui continuent au niveau de la bride dans un collet de bride circonférentiel (1), **caractérisé en ce que** d'autres nervures (24, 25, 26, 27, 34, 35) sont disposées parallèlement et/ou aboutissent dans des nervures qui sont disposées en direction du centre de l'axe du logement de palier.

2. Logement de palier selon la revendication 1, **caractérisé en ce que** le cylindre de palier (2) est accouplé à un collet de bride (1) par l'intermédiaire d'une barrette de liaison (3) et qu'un appui supplémentaire du cylindre de palier (2) constitué par des nervures (7) orientées radialement vers l'extérieur est prévu et qui, partant de la barrette de liaison (3), se poursuivent le long du cylindre de palier (2) jusque pardessus le collet de bride (1).

3. Logement de palier selon les revendications 1 et 2, **caractérisé en ce qu**'un collecteur de fuite d'eau (6a) est relié à l'intérieur du cylindre de palier (2) par l'intermédiaire d'un canal de drainage (6c).

4. Logement de palier selon les revendications 1 à 3, **caractérisé en ce que** le collecteur de fuites d'eau (6a) est conçu comme chambre.

5. Logement de palier selon les revendications 1 à 4, **caractérisé en ce que** le collecteur de fuite d'eau (6a) est placé dans le logement de palier en tant que pièce séparée.

6. Logement de palier selon les revendications 1 à 5, **caractérisé en ce que** le canal de drainage (6c) aboutit au niveau du siège de l'élément d'étanchéification (2b).

7. Logement de palier selon les revendications 1 à 6, **caractérisé en ce que** le canal de drainage (6e) aboutit au côté palier de la butée (5).

8. Logement de palier selon les revendications 1 à 7, **caractérisé en ce que** le cylindre de palier (17) est entouré d'un autre cylindre de renforcement (20) et est pourvu de nervures radiales (21), qui relient les deux cylindres (17, 20) entre eux et avec la barrette de liaison (19).

9. Logement de palier selon les revendications 1 à 8, **caractérisé en ce que** le collecteur de fuite d'eau est intégré dans le logement de palier proprement-dit.

10. Logement de palier selon les revendications 1 à 9, **caractérisé en ce qu**'il est prévu un collet de bride (1) qui porte des oeillets de bride (4) pour des moyens de fixation reliés au cylindre de palier (2) par l'intermédiaire de barrettes (7).

11. Logement de palier selon les revendications 1 à 10, **caractérisé en ce que** les nervures (15) qui entourent le cylindre de palier (10) sont à peu près en forme de toit.

12. Logement de palier selon les revendications 1 à 11, **caractérisé en ce qu**'une rainure horizontale (1b) est prévue en dessous de la collet de bride (1).

13. Logement de palier selon les revendications 1 à 12, **caractérisé en ce qu**'un collecteur de fuite d'eau (6a) en liaison avec le compartiment intérieur (5) est prévu entre au moins deux des nervures (7, 15, 21).

14. Logement de palier selon les revendications 1 à 13, **caractérisé en ce qu**'un trop-plein (5d) est prévu.

15. Logement de palier selon les revendications 1 à 14, **caractérisé en ce qu**'un circlip (2) formé comme un raccord à déclic et combiné à un circlip est prévu dans la contre-dépouille (2c) du siège du palier (2a).

16. Logement de palier selon les revendications 1 à 15, **caractérisé en ce que** le circlip est constitué comme frein à crabots et combiné à un circlip.

17. Logement de palier selon les revendications 1 à 16, **caractérisé en ce que** les oeillets de bride (4a) sont reliés à des nervures (30,31) ainsi qu'au cylindre de palier (20).

18. Logement de palier selon les revendications 1 à 17, **caractérisé en ce qu**'un élément d'étanchéification est prévu entre l'arbre rotatif et le cylindre de palier (2) au repos, étanchéifié en plus par rapport au siège de l'élément d'étanchéification (2b) par un joint élastique placé dans l'évidement (2d).

19. Logement de palier selon les revendications 1 à 18, **caractérisé en ce qu**'une butée (5) possède une rainure circonférentielle (5c) destinée à capter les impuretés provenant des alentours du siège du palier (2a).

20. Logement de palier selon les revendications 1 à 19, **caractérisé en ce que** des tenons (5a) sont prévus comme butées et comme écarteurs pour un élément d'étanchéification.

21. Logement de palier selon la revendication 2, **caractérisé en ce que** la barrette de liaison (3) est conçue en forme d'anneau.

22. Logement de palier selon la revendication 2, **caractérisé en ce que** la barrette de liaison (3) est disposée en biais par rapport à l'axe du cylindre de palier (2).

23. Logement de palier selon la revendication 2, **caractérisé en ce que** la barrette de liaison (3) est conçue en forme de cône.

24. Logement de palier selon les revendications 1 à 20, **caractérisé en ce que** l'extrémité (le) de la partie inférieure (1d) peut être complétée d'une couronne L avec ou sans aubes, le rotor étant conçu comme rotor ouvert.

25. Logement de palier selon les revendications 1 à 20, **caractérisé en ce que** la rainure (1b) est limitée côté fluide par une bague circonférentielle saillante (1c), de sorte que son diamètre dans sa condition plastique primaire est plus faible que le diamètre de l'épaulement (1a) et que dans leur condition de fonctionnement les deux sont équivalents.
